# DEMANDE DE BREVET EUROPEEN

(11) **EP 3 741 247 A1**
(43) Date de publication de la demande: **25.11.2020**
(21) Numéro de dépôt: 19176237.6
(22) Date de dépôt: 23.05.2019
(51) Int. Cl.: A44C 5/00, A44C 27/00

(54) **PIÈCE DE BIJOUTERIE EN MATIÈRE ÉLASTOMÈRE NATURELLE**

(71) Demandeur: The Swatch Group Research and Development Ltd, 2074 Marin (CH)
(72) Inventeur: FRANÇOIS, Nicolas, 2000 Neuchâtel (CH); DAHAN, Julien, 2900 Porrentruy (CH); KISSLING, Gregory, 2532 Macolin (CH)
(74) Mandataire: ICB SA

(57) **Abrégé**

L'invention se rapporte à une pièce de bijouterie réalisée en matière composite élastomère naturelle, caractérisée en ce que la matière composite élastomère naturelle comprend une matrice en élastomère naturel dans laquelle sont dispersés entre 0 et 6% de fibres cellulosiques, entre 0 et 5% d'agents anti-odeurs, et entre 0 et 30% de silice.

## Description

### Domaine de l'invention

La présente invention concerne le domaine technique des matériaux à base d'élastomères. Plus précisément, l'invention concerne une pièce de bijouterie réalisée à partir d'une matière élastomère naturelle, un procédé de fabrication desdites pièces, ainsi que lesdites pièces obtenues.

Dans la présente invention, pièce de bijouterie désigne tout objet de parure, mais également des composants utilisés dans l'horlogerie ou dans la joaillerie. Plus particulièrement, l'invention concerne des bracelets, tels que des bracelets de montre.

### Arrière-plan de l'invention

De nombreux matériaux élastomères existent sur le marché et sont connus pour leur utilisation en tant que bracelet par exemple pour leur qualité de confort, de touché souple et leur résistance.

On connait par exemple du brevet EP 2 468 127 une pièce de bijouterie, au moins partiellement réalisée en un matériau composite comprenant une matrice élastomère dans laquelle sont dispersées des charges de renfort choisies parmi le groupe comprenant des microfibres, des nanoparticules de polytétrafluoroéthylène, et leurs mélanges, ledit matériau composite étant obtenu à partir d'une composition comprenant entre 60% et 95% en poids d'au moins un élastomère, entre 0% et 5% en poids de microfibres et entre 0% et 40% en poids de nanoparticules de polytétrafluoroéthylène, par rapport au poids total de la composition, au moins l'une desdites charges de renfort étant présente.

Cependant, ces matières élastomères utilisées pour les bracelets ou les composants d'horlogerie en contact avec la peau sont basées sur des composants provenant à 90% ou plus de ressources fossiles, ce qui ne répond pas aux préoccupations actuelles de l'environnement.

Pour réponde à ces préoccupations environnementales, il existe des alternatives telles que les élastomères naturels. Cependant ces derniers contiennent un combiné de protéines très allergisantes et il convient donc d'utiliser des élastomères naturels exempts de ces allergènes. De tels élastomères sont par exemple proposés par la société Yulex Corp.

Bien qu'exempt d'allergènes, ce type d'élastomère naturel présente certains inconvénients pour réaliser des pièces suffisamment confortables au porté. En effet, ce type d'élastomère naturel présente une forte odeur liée au caoutchouc et à la méthode de vulcanisation, il est également peu résistant à la salissure et peu agréable au contact de la peau.

### Résumé de l'invention

L'invention a notamment pour objectif de pallier aux différents inconvénients de ces techniques connues.

Plus précisément, un objectif de l'invention est de fournir une pièce de bijouterie en une matière élastomère naturelle destinée à être en contact prolongé avec la peau (direct ou indirect), et obtenir une matière élastomère naturelle ayant un impact limité, voir nul, sur l'environnement, tout en ayant des propriétés permettant d'améliorer l'évacuation de la transpiration et une bonne résistance au vieillissement (UV, transpiration, esthétique, déchirement, abrasion, etc...).

Ces objectifs, ainsi que d'autres qui apparaîtront plus clairement par la suite, sont atteints selon l'invention à l'aide d'une pièce de bijouterie réalisée en matière composite élastomère naturelle, ladite matière composite élastomère naturelle comprenant une matrice en élastomère naturel dans laquelle sont dispersés entre 0 et 6% de fibres cellulosiques, entre 0 et 5% d'agents anti-odeurs, et entre 0 et 30% de silice.

Conformément à d'autres variantes avantageuses de l'invention :
- l'élastomère naturel est du caoutchouc naturel déprotéiné ;
- la matière élastomère comprend un élastomère fluoré entre 5 et 20% ;
- la matière composite élastomère comprend des fibres cellulosiques courtes et des fibres cellulosiques longues, la longueur des fibres cellulosiques étant comprises entre 0.5mm et 1.5mm ;
- la matière élastomère comprend au moins entre 5 et 10% d'un additif colorant ;
- la matière élastomère comprend au moins entre 0 et 2% de polytétrafluoroéthylène ;
- la matière élastomère naturelle comprend au moins un agent de démoulage.

L'invention concerne aussi et notamment toute pièce d'horlogerie réalisée en matière élastomère naturelle conformément à l'invention.

L'invention concerne également un procédé de fabrication d'une pièce de bijouterie conforme à l'invention, le procédé de fabrication comprend les étapes suivantes :
- réaliser une composition comprenant au moins un élastomère naturel et entre 0 et 30% de silice ;
- ajouter des agents antiozonants et antioxydants ;
- ajouter entre 0 et 6% de fibres cellulosiques, et entre 0 et 5 % d'agents anti-odeurs ;
- ajouter un élastomère fluoré à hauteur de 5 à 20% ;
- réaliser un moulage de pièces à partir de la composition obtenue à l'étape précédente ;
- effectuer un étuvage des pièces moulées obtenues pendant 2 heures à 120°C ; et
- réaliser les étapes de finition de la pièce moulée obtenue.

D'autres caractéristiques et avantages de l'invention apparaîtront plus clairement à la lecture de la description suivante d'un mode de réalisation particulier de l'invention, donné à titre de simple exemple illustratif et non limitatif.

### Description détaillée des modes de réalisation préférés

L'invention concerne une pièce de bijouterie réalisée en matière composite élastomère naturelle, caractérisée en ce que la matière composite élastomère naturelle comprend une matrice en élastomère naturel dans laquelle sont dispersés entre 0 et 6% de fibres cellulosiques, entre 0 et 5% d'agents anti-odeurs, et entre 0 et 30% de silice.

Selon l'invention, la matière élastomère naturelle choisie pour la matrice est un caoutchouc naturel hypoallergénique, tel que celui fabriqué par la société Yulex Corp. La quantité d'élastomère naturel est de 100% en poids par rapport au poids total de la composition.

La dureté de la matière élastomère peut être choisie sur une gamme de 20 shore OO à 90 shore D suivant le besoin haptique et fonctionnel.

Il est possible de réaliser par moulage des éléments durs d'une boîte avec des duretés de 90 shore D par exemple, alors que les matières shore OO et shore A seront plutôt utilisées en revêtement sur un élément dur. Les pièces souples telles que les bracelets seront réalisées à partir d'une dureté shore A.

Par exemple, dans le cas d'une boîte de montre, l'élastomère peut être pulvérisé à la surface de la boite et servir de revêtement, ou bien surmoulé pour apporter un toucher doux.

Selon un aspect avantageux de l'invention, le caoutchouc présente naturellement des propriétés antibactériennes (Le latex issu de l'hévéa contient des sesquiterpènes qui sont des substances naturellement biocides) permettant de limiter, voire d'empêcher, le développement des bactéries, à la surface et à l'intérieur de la matière, dues essentiellement à la transpiration du porteur lorsque le bracelet est au contact de la peau par exemple.

La matière élastomère comprend aussi un agent anti-odeur tel que par exemple de la zéolite (Lithofill MM) de manière à absorber les odeurs, généralement cet agent se présente sous la forme de grain présentant une taille de 0 à 10 µm. Selon les besoins, la quantité d'agent antiodeur est comprise entre 0% à 5%. Selon une variante de l'invention, la zéolite sert de support pour diffuser un parfum, cette dernière pourra par exemple recevoir une ou des huiles essentielles ou encore une ou des fragrances. Un tel mode de réalisation est particulièrement intéressant compte tenu du fait que la zéolite permet de diffuser le parfum pendant une très longue durée.

La matière élastomère naturelle comprend également un agent de renfort tel que de la silice pour améliorer sa durabilité et sa résistance à l'usure, la quantité de silice présente est comprise entre 0% à 30%.

Selon l'invention, la matière élastomère comprend des microfibres hydrophiles agencée pour évacuer l'humidité, et notamment la transpiration, au travers de la matière élastomère. Conformément à la présente invention, les microfibres hydrophiles présentent une finesse inférieure à 150 mTex, ce qui est une taille suffisante pour pouvoir transporter les molécules type H₂O.

Selon l'invention, les fibres hydrophiles sont réalisées en une matière cellulosique, et on utilisera de préférence des fibres de type Lyocell telles que les Lenzing Tencel FCP.

De préférence, la composition selon l'invention comprend entre 0% et 6% de microfibres par rapport au poids total de la composition. Les microfibres utilisées présentent une longueur comprise entre 0.5 mm et 1.5mm.

La présence de ces microfibres dans la matière permet de former un réseau de canaux microscopiques, et les nanofibrilles formant les microfibres conduisent l'humidité rapidement et uniformément au travers de la matière.

De manière à améliorer le transport de l'humidité au travers de la matière, les microfibres incorporées dans la matière sont composées de microfibres cellulosiques courtes et de microfibres cellulosiques longues, la longueur des fibres cellulosiques étant comprises entre 0.5mm et 1.5mm.

Un tel mélange de microfibres courtes et microfibres longues font que les microfibres se touchent et forment des canaux améliorant le pouvoir de diffusion de la matrice formée par la matière élastomère et l'humidité peut être transportée par capillarité à travers la matière et ainsi être évacuée de la surface.

Selon l'invention, les microfibres ont préférentiellement une section transversale en forme d'hélice pour leur donner une surface spécifique plus importante et donc un pouvoir de diffusion plus rapide.

Plus précisément, la section des fibres hydrophiles est en forme d'hélice à n pales avec n strictement supérieur à deux, de manière à offrir une plus grande surface spécifique et ainsi favoriser l'évacuation de l'humidité.

La composition comprend des agents de vulcanisation propres à l'élastomère, et autres additifs traditionnels communément utilisés par l'homme du métier dans le domaine des formulations à base de caoutchouc. Les peroxydes sont par exemple des agents de vulcanisation couramment utilisés pour le caoutchouc. La composition comprend également un accélérateur de vulcanisation et un retardateur de vulcanisation, respectivement présents à hauteur de 8% et 0.5%.

Avantageusement, la composition peut comprendre un colorant ou un pigment. Des mélanges de colorants et/ou de pigments peuvent également être utilisés.

La composition comprend aussi des agents antiozonants et des agents antioxydants afin de protéger le caoutchouc naturel du vieillissement, ces derniers sont respectivement présents à hauteur de 1%.

De manière à améliorer la couleur du caoutchouc, on utilise du dioxyde de titane pour contrebalancer le couleur jaune du caoutchouc naturel et ainsi obtenir une composition de couleur blanche, la quantité de dioxyde de titane utilisée est comprise entre 5 et 10%. Bien évidemment d'autres colorants, naturels de préférence, peuvent être ajoutés pour obtenir la couleur désirée.

On ajoute également un fluoroélastomère de type FKM transparent à hauteur de 20% pour améliorer la résistance à la salissure de la composition et améliorer la souplesse du produit final.

Selon un mode de réalisation de l'invention, on ajoute aussi du polytétrafluoroéthylène (PTFE) à hauteur de 0 à 2%, et plus précisément à hauteur de 1.84% dans la matière pour améliorer le touché. On obtient ainsi un touché plus doux au contact de la peau.

La matière décrite précédemment peut être directement moulée pour réaliser des brins de bracelets mono-matière à base d'élastomère naturel, ou encore surmoulé pour réaliser des brins de bracelets bi-matières, chaque brin présentant une première partie inférieure en matière naturelle en contact avec la peau, et une partie supérieure dans une autre matière avantageuse pour sa fonction. On peut également imaginer que chacune des parties présente une couleur différente dans un but purement esthétique.

Ci-après, deux exemples de composition sont décrits, chacun d'entre eux comprend une base qui forme la matrice élastomère dans laquelle sont dispersés les additifs. Ces exemples se basent sur des échantillons réalisés par la demanderesse conformément à l'invention.

| **Ingrédients** | **YUL 16** | **YUL 17** |
|---|---|---|
| Yulex Pure | 100 | 100 |
| Acide stéarique | 0 | 0 |
| Oxyde de zinc | 3 | 0 |
| Peroxyde | 4 | 4 |
| Antioxydant | 1 | 1 |
| Anti ozonant | 1 | 1 |
| Accélérateur | 8 | 8 |
| Retardateur | 0.5 | 0.5 |
| Fibre de cellulose | 6 | 6 |
| silice précipitée 180 +/-20 m2/g | 30 | 30 |
| TiO2 | 10 | 5 |
| kaolin/clay | 2 | 0 |
| Zeolite | 5 | 5 |
| FKM | 20 | 20 |
| PTFE | 0 | 1.84 |

La pièce de bijouterie en matière composite élastomère selon l'invention est obtenue par un procédé comprenant les étapes suivantes :
- réaliser une composition comprenant au moins un élastomère naturel et entre 0 et 30% de silice ;
- ajouter des agents antiozonants et antioxydants ;
- ajouter entre 0 et 6% de fibres cellulosiques, et entre 0 et 5 % d'agents anti-odeurs ;
- ajouter un élastomère fluoré à hauteur de 5 à 20% ;
- réaliser un moulage ou un surmoulage de pièces à partir de la composition obtenue à l'étape précédente ;
- effectuer un étuvage des pièces moulées ou surmoulées obtenues pendant 2 heures à 120°C ; et
- réaliser les étapes de finition de la pièce moulée obtenue.

Selon les besoins de l'homme du métier et des pièces à réaliser, les étapes de finition de la pièce moulée peuvent consister en une couture, l'impression d'un motif, la réalisation de trous dans la matière, etc...

Le moulage de la composition peut être effectué par tout type de procédé connu de l'homme du métier, tel que le moulage par injection, par compression.

La vulcanisation est réalisée de manière connue à une température généralement comprise entre 10°C et 200°C, pendant un temps suffisant qui peut varier en fonction de la pièce désirée, par exemple entre 60 et 380 secondes en fonction de la température de vulcanisation, du système de vulcanisation adopté et de la cinétique de vulcanisation de la composition.

La pièce de bijouterie peut être par exemple un bracelet, notamment un bracelet de montre. Plus spécifiquement, un bracelet selon l'invention peut présenter des formes et des découpes particulières et répondre malgré tout à un cahier des charges sévère en termes de tenue mécanique, et plus spécifiquement en termes de résistance à la traction, de résistance aux salissures, tout en prodiguant une bonne évacuation de la sueur du porteur.

Une telle matière naturelle permet de fabriquer des pièces d'horlogerie ou des bijoux comme des bracelets, des boucles de bracelets, des colliers, des boîtes, des fonds de boîte, des poussoirs, des boucles ou encore des lunettes.

Bien entendu, la présente invention ne se limite pas à l'exemple illustré et est susceptible de diverses variantes et modifications qui apparaîtront à l'homme de l'art.

## Revendications

1. Pièce de bijouterie réalisée en matière composite élastomère naturelle, **caractérisée en ce que** la matière composite élastomère naturelle comprend une matrice en élastomère naturel dans laquelle sont dispersés entre 0 et 6% de fibres cellulosiques, entre 0 et 5% d'agents anti-odeurs, et entre 0 et 30% de silice.

2. Pièce de bijouterie selon la revendication 1, **caractérisée en ce que** l'élastomère naturel est un caoutchouc.

3. Pièce de bijouterie selon la revendication 1 ou 2, **caractérisée en ce que** la matière élastomère comprend un élastomère fluoré entre 5 et 20%.

4. Pièce de bijouterie selon la revendication 1 à 3, **caractérisée en ce que** la matière composite comprend des fibres cellulosiques courtes et des fibres cellulosiques longues, la longueur des fibres cellulosiques étant comprises entre 0.5mm et 1.5mm.

5. Pièce de bijouterie selon l'une des revendications 1 à 4, **caractérisée en ce que** la matière élastomère comprend au moins entre 5 et 10% d'un additif colorant.

6. Pièce de bijouterie selon l'une des revendications 1 à 5, **caractérisée en ce que** l'agent anti-odeurs est la zéolite.

7. Pièce de bijouterie selon la revendication 6, **caractérisée en ce que** la zéolite sert de support pour diffuser un parfum ou une odeur, la zéolite étant apte à recevoir au moins une huile essentielle, et/ou au moins une fragrance.

8. Pièce de bijouterie selon l'une des revendications 1 à 7, **caractérisée en ce que** la matière élastomère comprend moins entre 0 et 2% de polytétrafluoroéthylène.

9. Pièce de bijouterie selon l'une des revendications 1 à 8, **caractérisée en ce que** la matière élastomère naturelle comprend au moins un agent de démoulage.

10. Procédé de fabrication d'une pièce de bijouterie selon l'une des revendications 1 à 9, **caractérisé en ce qu'**il comprend les étapes suivantes :
- réaliser une composition comprenant au moins un élastomère naturel et entre 0 et 30% de silice ;
- ajouter des agents antiozonant et antioxydant ;
- ajouter entre 0 et 6% de fibres cellulosiques, et entre 0 et 5 % d'agents anti-odeurs ;
- ajouter un élastomère fluoré à hauteur de 20% ;
- réaliser un moulage de pièces à partir de la composition obtenue à l'étape précédente ;
- effectuer un étuvage des pièces moulées obtenues pendant 2 heures à 120°C ; et
- réaliser les étapes de finition de la pièce moulée obtenue.

11. Procédé selon la revendication 10, **caractérisé en ce que** l'élastomère est un caoutchouc.

12. Procédé selon les revendications 10 ou 11, **caractérisé en ce que** la composition comprend au moins un additif colorant.

13. Procédé selon l'une des revendications 10 à 12, **caractérisé en ce que** la composition comprend au moins un agent de démoulage.
